# DEMANDE DE BREVET EUROPEEN

(11) **EP 0 584 423 A1**
(43) Date de publication de la demande: **02.03.1994**
(21) Numéro de dépôt: 92402976.2
(22) Date de dépôt: 03.11.1992
(51) Int. Cl.: A01G 9/12

(54) **Procédé et dispositif de déroulage d'un tuteur souple pour la culture de plantes grimpantes**

(30) Priorité: 02.09.1992 FR 9210513
(71) Demandeur: ARTIFIL Sarl, F-52000 Chaumont (FR)
(72) Inventeur: Boucknooghe, Xavier, F-52000 Chaumont (FR); Ampe, Paul, F-59431 Halluin (FR)
(74) Mandataire: Bruder, Michel

(57) **Abrégé**

La présente invention concerne un procédé de déroulage d'un tuteur souple, ou ficelle (2), pour la culture de plantes grimpantes, cette ficelle (2) étant enroulée au moins partiellement sur une première partie (3) d'un dévidoir (1) normalement formé d'un fil métallique plié à plat, ledit procédé étant caractérisé en ce qu'il consiste à arracher, sans le dérouler spire après spire, un écheveau (10) d'une ficelle enroulée à cet effet sur une deuxième partie (8) dudit dévidoir (1).

## Description

L'invention concerne un procédé et un dispositif de déroulage d'un tuteur souple pour la culture de plantes grimpantes. L'invention s'applique plus particulièrement à la culture des tomates en serre.

On sait que la culture des tomates en serre nécessite, pour être rentable, de mettre en oeuvre des techniques permettant à l'agriculteur d'économiser son temps. A cet effet, on a déjà développé, par exemple suivant les enseignements du brevet EP-B-1 703, une méthode de culture par laquelle la plante est guidée le long d'une corde, ou tuteur souple, qui est attachée de façon appropriée à un câble suspendu le long de la serre, ledit tuteur pouvant alors être déplacé le long du câble au fur et à mesure de la croissance de la plante ; de cette façon, la tige de la plante peut se retrouver couchée le long de la rangée de culture, pour lui permettre d'atteindre une longueur de 12 mètres, dans certains cas.

On connaît diverses variantes de cette méthode déjà ancienne qui ont pratiquement toutes en commun de faciliter l'accrochage ou le déroulage du tuteur en cours de croissance. En particulier, on a proposé d'enrouler le fil autour de bobines en matière plastique, lesquelles sont pourvues de crochets permettant de les suspendre au câble de soutien. Ces dispositifs présentent cependant des inconvénients importants par exemple un vieillissement rapide des matières dû aux ultraviolets, ou encore la propagation des maladies cryptogamiques d'une saison à l'autre, avec la conséquence qu'ils doivent être stérilisés entre deux mises en culture. D'un autre côté, on utilise des crochets en fils métalliques conçus pour servir de support à l'enroulement des fils, ou tuteurs, à la manière d'écheveaux ; ces systèmes d'accrochage et de déroulage du fil ne présentent pas les inconvénients des bobines plastiques, sont réutilisables facilement et leur coût est largement moins élevé que ces derniers.

Il n'en reste pas moins vrai que l'accrochage des tuteurs sur les câbles de soutien, - une opération qui s'effectue à 3 mètres de hauteur -, et le déroulage qui s'ensuit des 3 premiers mètres de fil jusqu'au sol, demeurent des opérations longues et pénibles que la présente invention vise précisément à simplifier et à écourter. En outre, comme des repères sont normalement agencés à un point adéquat du tuteur pour marquer le dévidage des premiers mètres requis, l'opération de mise en place des crochets réclame une attention assez soutenue, d'autant plus répétitive qu'il convient d'installer jusqu'à 25 000 tuteurs à l'hectare.

Pour réaliser ces objectifs, l'invention propose un nouveau procédé de déroulage d'un tuteur souple, ou ficelle, pour la culture de plantes grimpantes, cette ficelle étant enroulée au moins partiellement sur une première partie d'un dévidoir normalement formé d'un fil métallique plié à plat, ledit procédé étant caractérisé en ce qu'il consiste à arracher, sans le dérouler spire après spire, un écheveau d'une ficelle de réserve enroulée à cet effet sur une deuxième partie dudit dévidoir.

Pour la mise en oeuvre de ce procédé, on a conçu un dispositif de déroulage, ou dévidoir, comprenant classiquement une première partie autour de laquelle une ficelle est au moins partiellement enroulée, ledit dévidoir étant normalement formé d'un fil métallique plié à plat, caractérisé en ce qu'il comporte une seconde partie autour de laquelle est enroulé un écheveau d'une ficelle, ladite seconde partie étant reliée à ladite première partie par des moyens élastiques, déformables ou sectionnables qui sont agencés pour permettre à l'utilisateur d'arracher en une seule opération la quantité de ficelle enroulée autour de ladite seconde partie, sans avoir à dérouler spire après spire ladite quantité de ficelle.

On comprend donc qu'avec un dévidoir conforme à l'invention, le maraîcher va pouvoir disposer d'une manière simple et rapide de la quantité de ficelle exactement nécessaire à la mise en culture d'un plant, par exemple de tomates, sans se soucier de vérifier la longueur de cette ficelle, ni avoir à dérouler depuis une hauteur habituelle de trois mètres, l'écheveau mis en réserve à cet effet ; un simple geste d'arrachage suffit donc à extraire la partie basse du tuteur, l'accrochage de ce dernier sur le câble de soutien pouvant alors se faire d'une manière classique au moyen de l'encoche normalement prévue sur le haut dudit dévidoir.

D'autres caractéristiques et avantages de la présente invention ressortiront mieux de la description qui va suivre de plusieurs modes de réalisation d'un dévidoir pour tuteur souple destiné à la culture des plantes grimpantes, ces modes de réalisation étant donnés à titre d'exemples non limitatifs de l'invention en référence aux dessins annexés sur lesquels :
- la figure 1 est une vue en élévation d'une première variante d'exécution d'un dévidoir conforme à l'invention, réalisé en fil métallique plié, avec une première partie de bobinage, ou partie principale, sur laquelle est enroulée la portion principale de la ficelle devant servir de tuteur souple et une seconde partie de bobinage, ou partie secondaire, autour de laquelle se trouve bobiné un écheveau de réserve d'une longueur adéquate pour la mise en culture du plant à tuteurer,
- la figure 2 montre l'utilisation de ce dispositif avec, en traits pleins, le dévidoir dans sa position initiale de la figure 1 et, en traits mixtes, le dévidoir dans sa position de largage de l'écheveau de réserve, cette dernière opération étant obtenue par un arrachage à la main dudit écheveau par déformation élastique d'au moins la partie secondaire dudit dévidoir,
- la figure 3 représente l'accrochage du dévidoir ainsi préparé sur le câble aménagé à l'intérieur d'une serre pour le soutien des tuteurs souples,
- la figure 4 est une variante d'exécution du dévidoir représenté sur la figure 1, comportant une partie secondaire de bobinage recouvrant en partie la partie principale,
- la figure 5 est encore une variante d'exécution de l'invention, pour laquelle des moyens sectionnables sont prévus entre les deux parties de bobinage du dévidoir,
- la figure 6 est une vue en élévation d'une autre variante d'exécution d'un dévidoir conforme à l'invention, présentant une amélioration destinée à faciliter le bobinage automatique de la fiscelle sur le dévidoir.

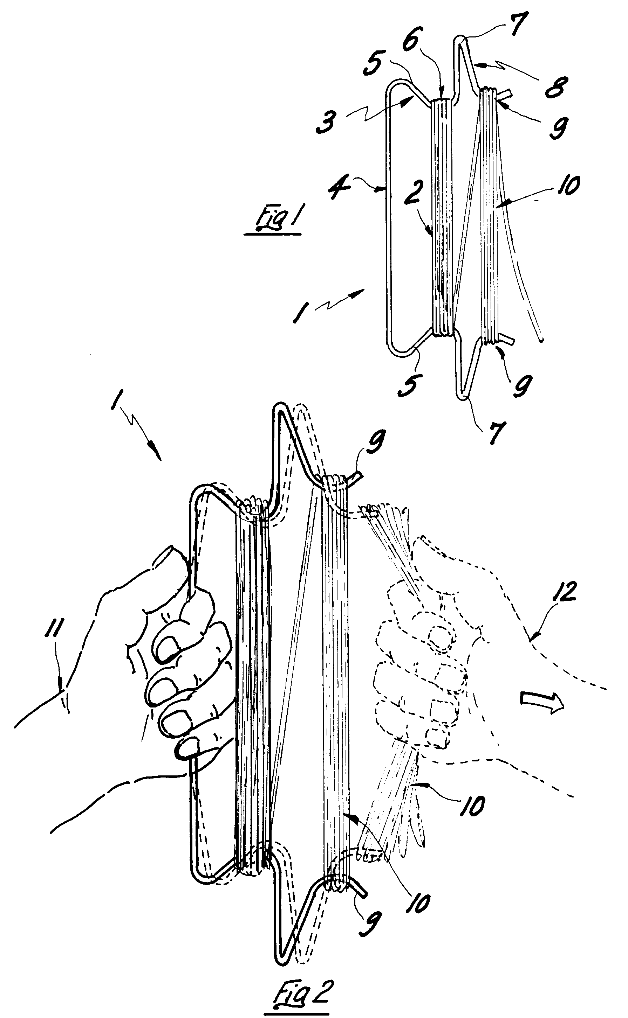

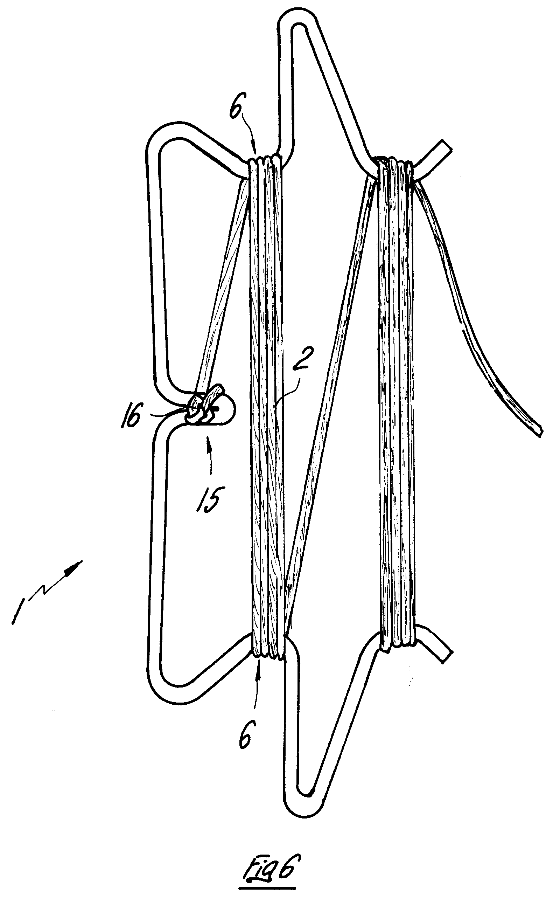

Le dévidoir 1 représenté sur les figures 1 à 3 annexées est destiné au déroulage d'une ficelle 2 qui destinée à servir de tuteur souple à une plante grimpante, par exemple un plant de tomate, dans la technique de culture ci-dessus rappelée. A cet effet, le dévidoir 1 est d'un type à claire-voie, et il est formé classiquement par pliage d'un fil métallique, par exemple de l'acier galvanisé d'un diamètre de quelques millimètres, ces dimensions nominales n'étant en aucune manière restrictives mais dépendant principalement de la résistance mécanique et de l'élasticité du dévidoir 1 que l'on désire obtenir. Le dévidoir 1 comporte ainsi :
- une première partie de bobinage, dite partie principale 3 ; cette première partie, de forme générale trapézoïdale, est formée par pliage du fil métallique symétriquement par rapport à une grande base 4, normalement droite, de sorte à former, à ses deux extrémités, des côtés 5 non parallèles et convergents vers des cols respectifs 6 autour desquels la majeure partie de la ficelle 2 est enroulée ; de ce fait, l'écheveau principal de ficelle 2 occupe sensiblement la petite base de la partie principale de bobinage 3.
- au moins une encoche 7, ou crochet, formé par pliage du fil dans la continuité d'au moins un des cols 6 ; dans les variantes représentées sur les figures 1 à 3, le dévidoir 1 comporte ainsi deux encoches 7, symétriques l'une de l'autre par rapport à une plan médian perpendiculaire à la grande base 4.
- une seconde partie de bobinage 8, formée dans la continuité de la ou des encoches 7, de sorte à constituer au moins un col 9 pour l'enroulement d'un écheveau de réserve 10 de la ficelle 2 ; dans le mode d'exécution préférentiel de l'invention représenté sur les figures 1 à 3, il est prévu deux cols 9, symétriques l'un de l'autre, ce qui permet de constituer un écheveau de réserve 10 qui est substantiellement parallèle à l'écheveau principal de ficelle 2 qui est enroulé autour de la partie principale de bobinage 3 ; dans le mode d'exécution représenté sur la figure 4, il est prévu un seul col 9 dans le prolongement de l'une des deux encoches 7, ce qui permet de former l'écheveau de réserve 10 autour dudit col 9 et du col 6 opposé de la partie principale de bobinage 3 du dévidoir ; de ce fait, l'écheveau de réserve 10 est ainsi enroulé en biais par rapport à l'écheveau principal.

Bien entendu, les deux écheveaux de ficelle 2 sont bobinés continûment autour du dévidoir 1, de sorte qu'après dévidage complet de la partie secondaire 8, la ficelle 2 puisse être déroulée directement depuis la partie principale 3. On notera que cette disposition de l'invention n'est pas limitative et que l'on pourrait tout aussi bien prévoir une discontinuité entre les deux écheveaux de ficelle 2.

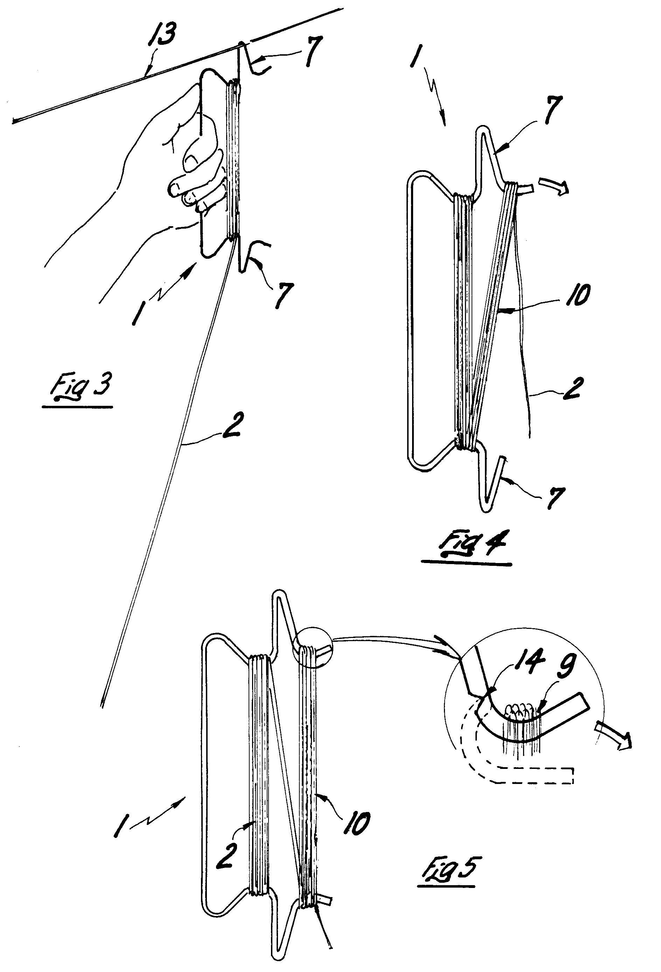

Suivant la présente invention, et conformément au dessin de la figure 2, le dévidoir 1 présente une forme, une élasticité et des dimensions qui permettent à l'utilisateur de placer sa main, par exemple sa main droite 11, entre les deux écheveaux de ficelle 2 et, tout en maintenant la grande base 4 avec son autre main, respectivement sa main gauche 12, d'arracher par simple traction l'écheveau de réserve 10 sans avoir à le dérouler spire à spire. Durant cette opération, le dévidoir 1 a tendance à s'écraser d'une manière élastique, conformément à ce qui est montré en traits mixtes sur la figure 2 ; à cet égard, on observera que cet écrasement permet de rapprocher les deux cols 9 de la partie secondaire de bobinage 8 l'un de l'autre et, en conséquence, de faire s'échapper la ficelle 2 hors de l'emprise desdits cols 9. Une fois l'écheveau de réserve 10 relâché, la longueur de ficelle 2 - par exemple 3 mètres -, qui était bobinée sur cette partie 8 du dévidoir 1, se déroule par simple gravité jusqu'au sol tandis que, conformément à la figure 3, l'utilisateur peut accrocher l'une des encoches 7 dudit dévidoir 1 sur un câble de soutien 13 qui est installé à cet effet dans la serre de mise en culture des plantes à tuteurer.

Dans la variante d'exécution de l'invention représentée sur la figure 4, l'opération d'arrachage de l'écheveau de réserve 10 se déroule de la même façon que ce qui est décrit précédemment.

Dans une autre variante de l'invention représentée sur la figure 5, le dévidoir 1 présente sensiblement la même forme que celui représenté sur la figure 1 mais, ainsi qu'on peut le voir sur le détail grossi de cette même figure, il est prévu des moyens sectionnables, par exemple une amorce de rupture 14, à proximité de l'un au moins des deux cols 9 de la partie de bobinage secondaire 8 de l'écheveau de réserve 10. De cette manière, l'élasticité du dévidoir 1 joue un rôle moins important puisqu'au moment où l'utilisateur va arracher l'écheveau de réserve 10, l'amorce de rupture 14 est susceptible de se rompre ou de plier, laissant s'échapper plus facilement la ficelle 2. A cet égard, il convient de noter que l'emploi d'un fil métallique pour la fabrication du dévidoir 1 n'a rien d'obligatoire et qu'un fil en matière plastique, élastique ou rigide, mis en forme par moulage ou analogue pourrait tout aussi bien convenir à la mise en oeuvre du procédé conforme à l'invention.

Conformément à la variante de l'invention représentée sur la figure 6, le dévidoir 1 a été modifié de manière à présenter une zone d'accrochage de la ficelle 2 en forme d'appendice 15 rentrant, agencé par exemple perpendiculairement à la grande base 4 de la partie principale 3 de bobinage de la ficelle 2. Cet appendice 15 est ici formé par le cambrage du fil métallique de manière à constituer une fente venant serrer et coincer l'extrémité de la ficelle 2 au début du bobinage du dévidoir 1. Ainsi, grâce à un noeud 16 ou à tout moyen d'arrêt équivalent mis en place à l'extrémité de ladite ficelle 2, il est aisé de procéder au bobinage d'une manière automatique ou semi-automatique. A cet effet, la longueur de l'appendice 15 vers l'intérieur du dévidoir 1 est telle que l'extrémité de la ficelle 2 puisse être amenée à proximité de la ligne imaginaire joignant les cols 6 du dévidoir 1 autour desquels la majeure partie de la ficelle 2 est enroulée, avec l'avantage que l'on comprend sur la mise en oeuvre du bobinage.

Les divers dispositifs décrits plus haut procurent un gain de temps appréciable sur la mise en place des tuteurs, sont peu coûteux à fabriquer, sont durables, faciles à bobiner et, le cas échéant, peuvent être facilement recyclés.

## Revendications

1. Procédé de déroulage d'un tuteur souple, ou ficelle (2), pour la culture de plantes grimpantes, cette ficelle (2) étant enroulée au moins partiellement sur une première partie (3) d'un dévidoir (1) normalement formé d'un fil métallique plié à plat, ledit procédé étant caractérisé en ce qu'il consiste à arracher, sans le dérouler spire après spire, un écheveau (10) d'une ficelle enroulée à cet effet sur une deuxième partie (8) dudit dévidoir (1).

2. Dispositif de déroulage, ou dévidoir (1), comprenant classiquement une première partie (3) autour de laquelle une ficelle (2) est au moins partiellement enroulée, ledit dévidoir (1) étant normalement formé d'un fil métallique plié à plat, caractérisé en ce qu'il comporte une seconde partie (8) autour de laquelle est enroulé un écheveau (10) d'une ficelle, ladite seconde partie (8) étant reliée à ladite première partie (3) par des moyens élastiques, déformables ou sectionnables qui sont agencés pour permettre à l'utilisateur d'arracher en une seule opération la quantité de ficelle (2) enroulée autour de ladite seconde partie (8), sans avoir à dérouler spire après spire ladite quantité de ficelle (2).

3. Dispositif selon la revendication précédente, caractérisé en ce qu'il est formé par pliage d'un fil métallique et comporte une première partie de bobinage, dite partie principale (3), au moins une encoche (7), et une seconde partie de bobinage (8), formée dans la continuité de la ou des encoches (7), de sorte à constituer au moins un col (9) pour l'enroulement d'un écheveau de réserve (10) de la ficelle (2).

4. Dispositif selon la revendication précédente, caractérisé en ce que la première partie de bobinage, dite partie principale (3), est de forme générale trapézoïdale.

5. Dispositif selon la revendication précédente, caractérisé en ce que la première partie de bobinage, dite partie principale (3), est formée par pliage du fil métallique symétriquement par rapport à une grande base (4), normalement droite, de sorte à former à ses deux extrémités des côtés (5) convergeant vers des cols respectifs (6) autour desquels la majeure partie de la ficelle (2) est enroulée.

6. Dispositif selon l'une quelconque des revendications 4 ou 5, caractérisé en ce que la seconde partie de bobinage (8) comporte deux cols (9), symétriques l'un de l'autre, ce qui permet de constituer un écheveau de réserve (10) qui est substantiellement parallèle à l'écheveau principal de ficelle (2) qui est enroulé autour de la partie principale de bobinage (3).

7. Dispositif selon l'une quelconque des revendications 4 ou 5, caractérisé en ce que la seconde partie de bobinage (8) comporte un seul col (9) formé dans le prolongement de l'une des deux encoches (7), ce qui permet de constituer un écheveau de réserve (10) qui est enroulé en biais par rapport à l'écheveau principal de ficelle (2) qui est enroulé autour de la partie principale de bobinage (3).

8. Dispositif selon l'une quelconque des revendications 4 ou 5, caractérisé en ce qu'il comporte des moyens sectionnables, par exemple une amorce de rupture (14), à proximité de l'un au moins des deux cols (9) de la partie de bobinage secondaire (8) de l'écheveau de réserve (10).

9. Dispositif selon l'une quelconque des revendications 5 à 8, caractérisé en ce qu'il présente une zone d'accrochage de la ficelle (2) en forme d'appendice (15) rentrant, agencé perpendiculairement à la grande base (4) de la partie principale (3) de bobinage de la ficelle (2), et coopérant avec un noeud (16) ou un moyen d'arrêt analogue prévu à cet effet à l'extrémité de ladite ficelle (2).

10. Application du dispositif de déroulage d'un tuteur souple suivant l'une quelconque des revendications 2 à 9 à la culture des tomates en serre.
